# EUROPEAN PATENT APPLICATION

(11) **EP 2 869 253 A1**
(43) Date of publication of application: **06.05.2015**
(21) Application number: 14191473.9
(22) Date of filing: 03.11.2014
(51) Int. Cl.: G06Q 10/10, G06F 3/01, H04L 12/58

(54) **Method for operating message application and electronic device implementing the same**

(30) Priority: 05.11.2013 KR 20130133810
(71) Applicant: Samsung Electronics Co., Ltd, Gyeonggi-do 443-742 (KR)
(72) Inventor: Kim, Yuhwan, Gyeonggi-do 443-742 (KR)
(74) Representative: Nederlandsch Octrooibureau

(57) **Abstract**

A message application operating method for promptly transmitting a message to a user without switching a screen, and an electronic device for implementing the method are provided. The method includes executing an application including a schema; recognizing an execution request for a message composing window while the application is executed; displaying the message composing window in response to the request; recognizing a completion of inputting a message in the message composing window; and requesting a transmission of the message to a related application that processes the schema.

## Description

### BACKGROUND OF THE INVENTION

### 1. Field of the Invention

The present invention generally relates to a method for operating a message application and an electronic device implementing for the method.

### 2. Description of the Related Art

Recently, various types of message-related applications have been developed for electronic devices, such as a smart phone, a tablet Personal Computer (PC), or the like. To transmit a message using various types of message applications, a user needs to execute a corresponding application. Also, an electronic device takes several seconds to provide an environment for writing and transmitting a simple message. Except for several situations, such as sending an attached file or using HTML, the electronic device may not use many embodied functions for most messages. Also, an area of the screen of the electronic device where the functions are disposed may unnecessarily occupy the screen and may deteriorate efficiency.

For example, while surfing the web using the electronic device, the user may need to execute a contact application, such as a short message service application or a messenger application, or other applications. The electronic device may pause or terminate the web browser, execute a corresponding application, and display a corresponding window. The electronic device terminates the corresponding application, executes the previous application again, and displays the corresponding web page again. To accomplish a desired task, the user may need to switch application windows. However, switching may cause inconvenience to the user.

### SUMMARY OF THE INVENTION

The present invention has been made to solve at least the above-mentioned problems and/or disadvantages and to provide at least the advantages described below. Accordingly, an aspect of the present invention is to provide a method and apparatus for executing transmission of a message without switching a screen of an application.

In accordance with an aspect of the present invention, a method for managing a message application is provided. The method includes executing an application including a schema; recognizing an execution request for a message composing window while the application is executed; displaying the message composing window in response to the request; recognizing a completion of inputting a message in the message composing window; and requesting transmission of the message to a related application that processes the schema.

In accordance with another aspect of the present invention, an electronic device is provided. The electronic device includes a display module including a touch panel installed in a screen; a memory configured to store a schema and a message sender of a related application; and a processor configured to execute an application having a schema, to recognize an execution request for a message composing window while the application is executed, to display the message composing window in response to the request, to recognize a completion of inputting a message in the message composing window, and to request transmission of the message to a related application that processes the schema.

### BRIEF DESCRIPTION OF THE DRAWINGS

The above and other aspects, features and advantages of the present invention will be more apparent from the following detailed description taken in conjunction with the accompanying drawings, in which:
FIG. 1 illustrates a block diagram of an electronic device according to various embodiments of the present invention;
FIG. 2 illustrates a block diagram of hardware according to various embodiments of the present invention;
FIG. 3 illustrates a block diagram of a programming module 300 according to various embodiments of the present invention;
FIG. 4 illustrates an application registration process of a message processing module according to various embodiments of the present invention;
FIG. 5 illustrates a flowchart illustrating a message transmission process of an electronic device that implements a message application operating method according to an embodiment of the present invention;
FIG. 6 illustrates a block diagram of a message processing module according to various embodiments of the present invention;
FIG. 7 illustrates a screen on which a message composing window is output according to an embodiment of the present invention;
FIG. 8A illustrates a screen displaying a web browser and a message composing window displayed on a portion of the web browser, FIG. 8B illustrates a screen in which a message composing window is used, and FIG. 8C illustrates completion of message transmission of the message composing window;
FIG. 9A illustrates a screen displaying a web browser and a message composing window displayed on a portion of the web browser, FIG. 9B illustrates a screen in which a message composing window is used, and FIG. 9C illustrates a called application that is executed;
FIG. 10A illustrates a screen displaying a web browser and a message composing window displayed on a portion of the web browser, FIG. 10B illustrates a screen in which a message composing window is used, and FIG. 10C illustrates a called application that is executed;
FIG. 11A illustrates a screen displaying a video browser, FIG. 11B illustrates a screen in which a message composing window is used, and FIG. 11C illustrates a called application that is executed; and
FIG. 12A illustrates a screen displaying a web browser in a landscape mode and a message composing window displayed on a portion of the web browser, FIG. 12B illustrates a screen in which a window is used, and FIG. 12C illustrates a called application that is executed.

### DETAILED DESCRIPTION OF EMBODIMENTS OF THE PRESENT INVENTION

Hereinafter, various embodiments will be described in detail with reference to enclosed drawings. It should be noted that the same elements will be designated by the same reference numerals although they are shown in different drawings. Further, a detailed description of well-known functions and configurations incorporated herein will be omitted when it makes the subject matter of the present invention unclear. Hereinafter, it should be noted that only the descriptions that may help understanding the operations provided in association with the various embodiments of the present invention will be provided, and other descriptions will be omitted to avoid making the subject matter of the present invention unclear.

An electronic device according to the present invention may be a device including a communication function. For example, the device corresponds to a combination of at least one of a smartphone, a tablet Personal Computer (PC), a mobile phone, a video phone , an e-book reader, a desktop PC, a laptop PC, a netbook computer, a Personal Digital Assistant (PDA), a Portable Multimedia Player (PMP), an MP3 player, a mobile medical device, an electronic bracelet, an electronic necklace, an electronic appcessory, a camera, a wearable device, an electronic clock, a wrist watch, home appliances (for example, an air-conditioner, vacuum, an oven, a microwave, a washing machine, an air cleaner, and the like), an artificial intelligence robot, a TV, a Digital Video Disk (DVD) player, an audio device, various medical devices (for example, Magnetic Resonance Angiography (MRA), Magnetic Resonance Imaging (MRI), Computed Tomography (CT), a scanning machine, a ultrasonic wave device, and the like), a navigation device, a Global Positioning System (GPS) receiver, an Event Data Recorder (EDR), a Flight Data Recorder (FDR), a set-top box, a TV box (for example, Samsung HomeSyncTM, Apple TVTM, or Google TVTM), an electronic dictionary, vehicle infotainment device, an electronic equipment for ship (for example, navigation equipment for ship, gyrocompass, and the like), avionics, a security device, electronic clothes, an electronic key, a camcorder, game consoles, a Head-Mounted Display (HMD), a flat panel display device, an electronic frame, an electronic album, furniture or a portion of a building/structure that includes a communication function, an electronic board, an electronic signature receiving device, a projector, and the like. It is obvious to a person skilled in the art that the electronic device according to the present invention is not limited to the above-mentioned devices.

A method and apparatus according to the present invention may execute transmission of a message without switching a screen between application windows. A message may be transmitted without switching a screen and thus, the transmission of the message is promptly and conveniently executed.

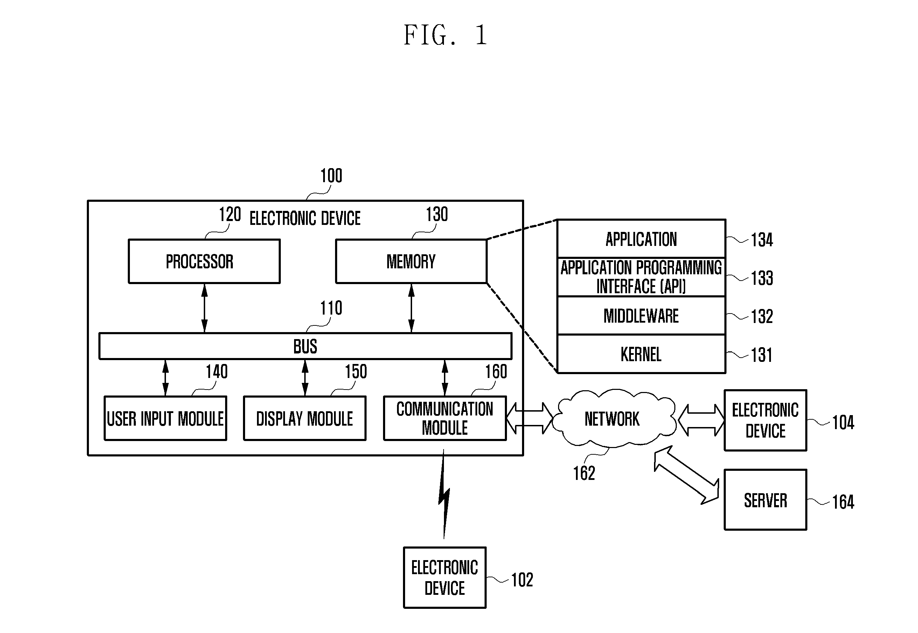

FIG. 1 is a block diagram of an electronic device according to various embodiments of the present invention.

Referring to FIG. 1, an electronic device 100 includes a bus 110, a processor 120, a memory 130, a user input module 140, a display module 150, or a communication module 160.

The bus 110 is a circuit that may connect the component elements to one another, and that may transfer communication (for example, a control message) between the described component elements.

The processor 120 receives commands from the described other component elements (for example, the memory 130, the user input module 140, the display module 150, the communication module 160, and the like) through, for example, the bus 110, decrypts the received commands, and executes operations or data processes based on the decrypted commands.

The memory 130 stores commands or data that may be received from the processor 120 or other component elements (for example, the user input module 140, the display module 150, the communication module 160, and the like), or may be generated by the processor 120 or other component elements. The memory 130 includes programming modules, for example, a kernel 131, middleware 132, an Application Programming Interface (API) 133, an application 134, and the like. Each described programming module may be formed of software, firmware, and hardware, or a combination of at least two of the software, firmware, and hardware.

The kernel 131 controls or manage the remaining programming modules, for example, system resources (for example, the bus 110, the processor 120, or the memory 130) used for executing operations or functions embodied in the middleware 132, the API 133, or the application 134. The kernel 131 may also provide an interface to the middleware 132, the API 133, or the application 134, so as to access each component element of the electronic device 100 for controlling or managing.

The middleware 132 acts as an intermediary so that the API 133 or the application 134 exchanges data with the kernel 131 through communication. The middleware 132 may also execute load balancing of a work request, with respect to work requests received from a plurality of applications 134, for example, through a method of assigning at least one of the plurality of applications 134 with a priority for using a system resource of the electronic device 100 (for example, the bus 110, the processor 120, the memory 130, or the like).

The API 133 is an interface through which the application 134 controls functions provided from the kernel 131 or the middleware 132, and includes, for example, at least one interface or function for controlling a file, controlling a window, processing an image, controlling a character, and the like.

The user input module 140 receives, for example, an input of a command or data from a user, and transfers the received command or data to the processor 120 or the memory 130 through the bus 110. The display module 150 may display a picture, an image, data, and the like.

The communication module 160 connects communication between another electronic device 102 and the electronic device 100. The communication module 160 may support a predetermined short range communication protocol (for example, Wireless Fidelity (WiFi), Bluetooth (BT), Near Field Communication (NFC)) or predetermined network communication 162 (for example, the Internet, a Local Area Network (LAN), a Wide Area Network (WAN), a telecommunication network, a cellular network, a satellite network, a POTS (Plain Old Telephone Service), and the like). Each of the electronic devices 102 and 104 may be a device identical to the electronic device 100, or may be a different device (for example, a different type of device).

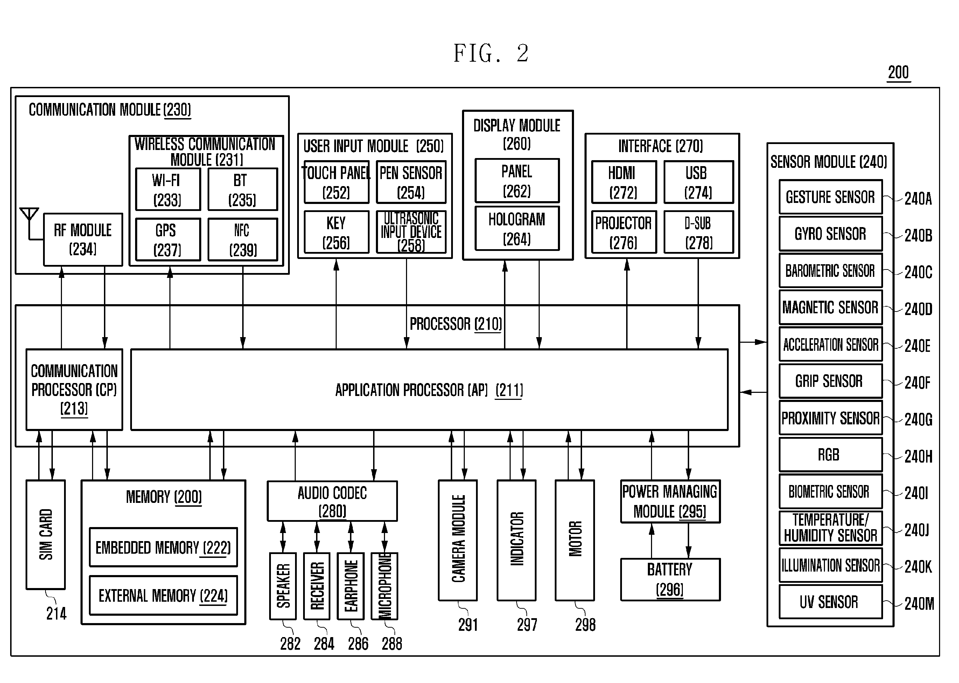

FIG. 2 is a block diagram of hardware according to various embodiments of the present invention.

The hardware 200 may be, for example, the electronic device 100 of FIG. 1. Referring to FIG. 2, the hardware 200 includes one or more processors 210, a Subscriber Identification Module (SIM) card 214, a memory 220, a communication module 230, a sensor module 240, a user input module 250, a display module 260, an interface 270, an audio codec 280, a camera module 291, a power managing module 295, a battery 296, an indicator 297, and a motor 298.

The processor 210 includes one or more Application Processors (APs) 211 or one or more Communication Processors (CPs) 213. The processor 210 may be, for example, the processor 120 of FIG. 1. Although it is illustrated that the AP 211 and the CP 213 are included in the processor 210 in FIG. 2, the AP 211 and the CP 213 may be included in different IC packages. The AP 211 and the CP 213 may also be included in a single IC package.

The AP 211 operates an Operation System (OS) or an application program so as to control a plurality of hardware or software component elements connected to the AP 211, and may execute various data processes and operations including multimedia data. The AP 211 may be embodied to be, for example, a System on Chip (SoC). The processor 210 may further include a Graphic Processing Unit (GPU).

The CP 213 manages a data link and converts a communication protocol used in communications among electronic devices that are connected to an electronic device (for example, the electronic device 100 of FIG. 1) including the hardware 200 over a network. The CP 213 may be embodied to be, for example, a SoC. The CP 213 may execute at least a portion of a multimedia controlling function. The CP 213 may distinguish and authenticate a terminal in a communication network using a Subscriber Identification Module (for example, the SIM card 214). The CP 213 may also provide a user with services such as a voice call, a video call, a text message, or packet data, and the like.

The CP 213 also controls transmission and reception of data of the communication module 230. Although the component elements such as the CP 213, the power managing module 295, the memory 220, and the like, are illustrated as component elements separated from the AP 211 in FIG. 2, the AP 211 may be configured to include at least a few of the component elements described above (for example, the CP 213).

The AP 211 or the CP 213 may load a command or data received from at least one of non-volatile memory and other component elements connected to each entity in a volatile memory, and may process the same. The AP 211 or the CP 213 may also store, in a non-volatile memory, data received from at least one of other component elements, or generated by at least one of the other component elements.

The SIM card 214 is a card embodying a subscriber identification module, and may be inserted into a slot formed in a predetermined portion of an electronic device. The SIM card 214 includes unique identification information (for example, an Integrated Circuit Card IDentifier (ICCID)) or subscriber information (for example, an International Mobile Subscriber Identity (IMSI)).

The memory 220 includes an embedded memory 222 or an external memory 224. The memory 220 may be, for example, the memory 130 of FIG. 1. The embedded memory 222 includes, for example, at least one of a volatile memory (for example, a Dynamic Random-Access Memory (RAM) (DRAM), a Static RAM (SRAM), a Synchronous Dynamic RAM (SDRAM), and the like), and a non-volatile memory (for example, an One Time Programmable Read-Only Memory (ROM) (OTPROM), a Programmable ROM (PROM), an Erasable and Programmable ROM (EPROM), an Electrically Erasable and Programmable ROM (EEPROM), a mask ROM, flash ROM, NAND flash memory, an NOR flash memory, and the like). The embedded memory 222 may be in a form of a Solid State Drive (SSD). The external memory 224 may further include a flash driver, for example, a Compact Flash (CF), a Secure Digital (SD), a Micro Secure Digital (Micro-SD), a Mini Secure Digital (Mini-SD), an eXtreme Digital (xD), or a MemoryStick.

The communication module 230 includes a wireless communication module 231 or a Radio Frequency (RF) module 234. The communication module 230 may be, for example, the communication module 160 of FIG. 1. The communication module 231 includes, for example, WiFi 233, BT 235, GPS 237, or NFC 239. The wireless communication module 231 provides a wireless communication function using a radio frequency. The wireless communication module 231 may also include a network interface (for example, a LAN card), a modem, and the like, for connecting the hardware 200 to a network (for example, an Internet, a local area network (LAN), a wire area network (WAN), a telecommunication network, a cellular network, a satellite network, a plain old telephone service (POTS), and the like).

The RF module 234 transmits and receives data, for example, an RF signal or a called electronic signal. Although not illustrated, the RF module 234 may include, for example, a transceiver, a Power Amp Module (PAM), a frequency filter, a Low Noise Amplifier (LNA), and the like. The RF module 234 may further include a component for transceiving electronic waves over free air space in wireless communication, such as a conductor, a conducting wire, and the like.

The sensor module 240 includes, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a red, green, and blue (RGB) sensor 240H, a biometric sensor 240I, a temperature/humidity sensor 240J, an illumination sensor 240K, and a Ultra Violet (UV) sensor 240M. The sensor module 240 measures a physical quantity or senses an operation state of an electronic device, so as to convert the measured or sensed information into an electric signal. The sensor module 240 may also include, for example, an E-nose sensor, an electromyography (EMG) sensor, an electroencephalogram (EEG) sensor, an electrocardiogram (ECG) sensor, a fingerprint sensor, and the like. The sensor module 240 may further include a control circuit for controlling at least one sensor included in the sensor module 240.

The user input module 250 includes a touch panel 252, a (digital) pen sensor 254, a key 256, or an ultrasonic input device 258. The user input module 250 may be, for example, the user input module 140 of FIG. 1. The touch panel 252 recognizes a touch input based on, for example, at least one of a capacitive type, a resistive type, an infrared type, and an ultrasonic type. The touch panel 252 may further include a controller. When a touch input is the capacitive type, an indirect touch may be recognized, in addition to a direct touch. The term "direct touch scheme" refers to a scheme in which a conductive object (for example, a finger or a stylus pen) is directly in contact with a touch screen. The term "indirect touch scheme" may refer to a scheme in which a conductive object enclosed by a non-conductive object (for example, a finger of a hand with a glove on it) approaches a touch screen, or a non-conductive object (for example, a glove in which fingers are included) is in contact with a touch screen. The term "indirect touch scheme" may also refer to a scheme in which a finger touches a non-conductive object when the non-conductive object (for example, a cover for protecting a touch screen) is placed on the touch screen and is in contact with the touch screen. The term "indirect touch scheme" may further refer to a scheme commonly called "hovering", in which a finger is not in contact with a touch screen, and approaches the touch screen within a predetermined distance so as to generate an event. The touch panel 252 may further include a tactile layer, and provide a user with a tactile reaction. The touch panel 252 may be installed in a screen (that is, a touch screen) of the display module 260. For example, the touch panel 252 may be embodied as an add-on type indicating that a touch panel is positioned on a touch screen, or as an on-cell type or in-cell type indicating that a touch panel is inserted into the display module 260.

The (digital) pen sensor 254 is embodied, for example, using a method identical or similar to a method of receiving a touch input of a user, or using a separate recognition sheet. A key pad or a touch key may be used as the key 256. The ultrasonic input device 258 is a device that enables a terminal to recognize a sound wave using a microphone (for example, a microphone 288) through a pen that generates an ultrasonic wave which is wirelessly recognizable. The hardware 200 may receive, using the communication module 230, a user input from an external device (for example, a network, a computer, or a server) connected to the communication module 230.

The display module 260 includes a panel 262 or a hologram 264. The display module 260 may be, for example, the display module 150 of FIG. 1. The panel 262 may be, for example, a Liquid-Crystal Display (LCD) or an Active-Matrix Organic Light-Emitting Diode (AM-OLED). The panel 262 may be embodied to be, for example, flexible, transparent, or wearable. The panel 262 may be configured to be an integrated module with the touch panel 252. The hologram 264 shows a three-dimensional image in the air using interference of light. According to an embodiment, the display module 260 may further include a control circuit for controlling the panel 262 or the hologram 264.

For example, when the electronic device 100 is set to an automatic rotation mode, the application processor 211 analyzes sensing information collected from sensors so as to calculate a position of the electronic device 100, and may set a display mode to one of a landscape mode (i.e., a horizontal mode) and a portrait mode (i.e., a vertical mode) using the calculated value. Regardless of the position of the electronic device 100, the display mode may be set to be one of the two modes.

The interface 270 includes, for example, a High-Definition Multimedia Interface (HDMI) 272, a Universal Serial Bus (USB) 274, a projector 276, or a D-subminiature (D-sub). The interface 290 may also include, for example, a secure Digital (SD)/Multi-Media Card (MMC), or an Infrared Data Association (IrDA).

The audio codec 280 converts a voice to an electronic signal, or vice versa. The audio codec 280 may convert, for example, voice information input or output through a speaker 282, a receiver 284, an earphone 286, the microphone 288, and the like.

The camera module 291 is a device that photographs an image and a video, and may include one or more image sensors (for example, a front side lens and a back side lens), an Image Signal Processor (ISP), or a flash LED.

The power managing module 295 manages power of the hardware 200. Although not illustrated, the power managing module 295 may include, for example, a Power Management Integrated Circuit (PMIC), charger Integrated Circuit (IC), or a battery fuel gauge.

The PMIC may be contained in, for example, an integrated circuit or a SoC semiconductor. A charging type may be classified into a wired charging type and a wireless charging type. The charger IC charges a battery, and prevents an inrush of an overvoltage or over current from the charger. The charger IC may include a charger IC for at least one of the wired charging type or the wireless charging type. The wireless charging type may include, for example, a magnetic resonance type, a self-induction scheme, an electromagnetic wave scheme, and the like, and may further include an additional circuit for wireless charging, for example, a coil loop, a resonant circuit, a rectifier, and the like.

The battery gauge measures, for example, a remaining quantity of the battery 296, or a voltage, a current, or a temperature while charging. The battery 296 generates electricity so as to provide power, and may be, for example, a rechargeable battery.

The indicator 297 displays a predetermined state of the hardware 200 or a portion of the hardware 200 (for example, the AP 211), for example, a boot-up state, a message state, a charging state, and the like. The motor 298 converts an electric signal into a mechanical vibration. The Main Control Unit (MCU) 299 may control the sensor module 240.

Although not illustrated, the hardware 200 may include a processing device (for example, a GPU) for supporting a mobile TV. The processing device for supporting the mobile TV may process, for example, media data associated with the standard of Digital Multimedia Broadcasting (DMB), Digital Video Broadcasting (DVB), a media flow, and the like.

Each of the above-described component elements of the hardware according to the present invention may be formed in a single or plural form, and a name of a corresponding component element may be changed based on a type of an electronic device. The hardware according to the present invention may be configured to include at least one of the above-described component elements, a few of the component elements may be omitted, or an additional component element may be further included. Also, a few of the component elements of the hardware according to the present invention may be coupled to form a single entity, and may equivalently execute functions that corresponding component elements have executed before being coupled.

The term "module" may refer to, for example, a unit including one of hardware, software, and firmware, or a combination of at least two of them. The term "module" may be interchangeable with the terms, such as a "unit", "logic", a "logical block", a "component", a "circuit", and the like. A module may be a basal unit or a portion of an integrated component. A module may be a basal unit or a portion that executes one or more functions. A module may be mechanically or electrically embodied. For example, a module may include at least one of an Application-Specific Integrated Circuit (ASIC) chip, Field-Programmable Gate Arrays (FPGAs) or a programmable-logic device, which may execute operations that have been known or operations to be developed.

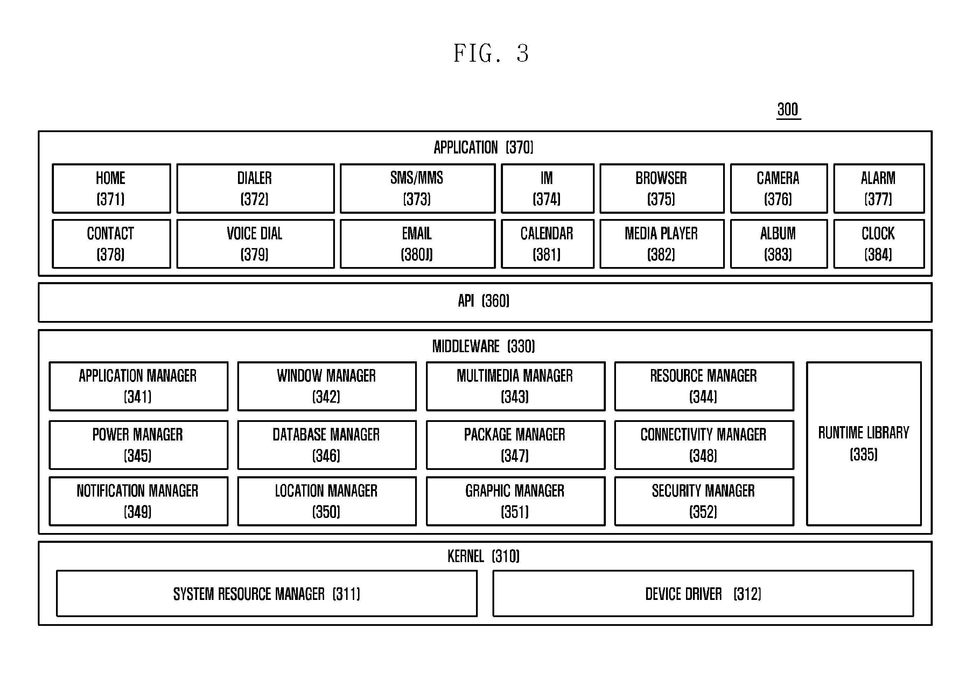

FIG. 3 is a block diagram of a programming module 300 according to an embodiment of the present invention.

The programming module 300 may be included (or stored) in the electronic device 100 (for example, the memory 130) of FIG. 1. At least a portion of the programming module 300 may be formed of software, firmware, and hardware, or a combination of at least two of the software, firmware, and hardware. The programming module 300 may include an operation system (OS) that is embodied in hardware (for example, the hardware 200 of FIG. 2) and controls resources associated with an electronic device (for example, the electronic device 100 of FIG. 1), or may include various applications (for example, an application 370) driven in the OS. For example, the OS may be Android, iOS, Windows, Symbian, Tizen, Bada, and the like. Referring to FIG. 3, the programming module 300 may include a kernel 310, middleware 330, an Application Programming Interface (API) 360, or the application 370.

The kernel 310 (for example, the kernel 131 of FIG. 1) includes a system resource manager 311 or a device driver 312. The system resource manager 311 includes, for example, a process managing unit, a memory managing unit, a file system managing unit, and the like. The system resource manager executes controlling, allocating, or collecting system resources. The device driver 312 includes, for example, a display driver, a camera driver, a Bluetooth driver, a shared memory driver, a USB driver, a keypad driver, a WiFi driver, or an audio driver. The device driver also includes an Inter-Process Communication (IPC) driver.

The middleware 330 includes a plurality of modules that are embodied in advance for providing a function that the application 370 commonly requires. The middleware 330 also provides a function through an API 360 so that the application 370 effectively uses limited system resources inside an electronic device. For example, the middleware 330 (for example, the middleware 132 of FIG. 1) includes at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 includes, for example, a library module that a complier uses to add a new function through a programming language while the application 370 is executed. The runtime library 335 executes input and output, management of a memory, a function associated with an arithmetic function, and the like.

The application manager 341 manages, for example, a life cycle of at least one of the applications 370. The window manager 342 manages a GUI resource used in a screen. The multimedia manager 343 recognizes a format required for playing back various media files, and executes encoding or decoding a media file using a codec for the corresponding format. The resource manager 344 manages resources such as a source code of at least one of the applications 370, a memory, a storage space, and the like.

The power manager 345 manages a battery or power by operating with a Basic Input/Output System (BIOS), and the like, and provides power information required for the operation. The database manager 346 manages creation, detection, or modification of a database to be used by at least one of the applications 370. The package manager 347 manages installation or updates of an application distributed in the form of a package file.

The connectivity manager 348 manages, for example, wireless connection such as WiFi, Bluetooth, and the like. The notification manager 349 displays or notifies a user of an event such as a message arrival, an appointment, a proximity alarm, and the like, in a manner that does not disturb the user. The location manager 350 manages location information of an electronic device. The graphic manager 351 manages a graphic effect to be provided to a user or a user interface related thereto. The security manager 352 provides various security functions required for system security, user authentication, and the like. When an electronic device (for example, the electronic device 100 of FIG. 1) includes a phone function, the middleware 330 may further include a telephony manager for managing a voice or video call function of an electronic device.

The middleware 330 may generate and use a new middleware module through various functional combinations of the described internal component element modules. The middleware 330 may provide a module specified for each type of an OS to provide a distinguishing function. The middleware 330 may also dynamically remove an existing component element or may add new component elements. Therefore, component elements specified in an embodiment of the present invention may be partially omitted, other component elements may be further added, or component elements that execute similar functions but have different names may be substituted.

The API 360 (for example, the API 133 of FIG. 1) is a set of API programming functions, and may be provided in a different configuration for each OS. When providing Android or iOS, for example, a single API set may be provided for each platform. When providing Tizen, for example, two or more API sets may be provided.

The application 370 (for example, the application 134 of FIG. 1) may include, for example, a preloaded application or a third party application.

At least a portion of the programming module 300 may be embodied by an instruction stored in a computer-readable storage medium. When an instruction is implemented by one or more processors (for example, the processor 210 of FIG. 2), one or more processors may execute a function corresponding to the instruction. The computer-readable storage medium may be, for example, the memory 260 of FIG. 2. At least a portion of the programming module 300 may be implemented (or executed) by, for example, the processor 210 of FIG. 2. At least a portion of the programming module 300 may include, for example, a module, a program, a routine, sets of instructions, and/or a process, for executing one or more functions.

The names of component elements of a programming module (for example, the programming module 300) according to the present invention may be different for each type of OS. A programming module according to the present invention may include at least one of the described component elements, a few of the component elements may be omitted, or additional component elements may be included. A programming module according to the present invention or operations executed by other component elements may be processed in a sequential, parallel, repetitive, or heuristic manner, a few operations may be omitted, or other operations may be added.

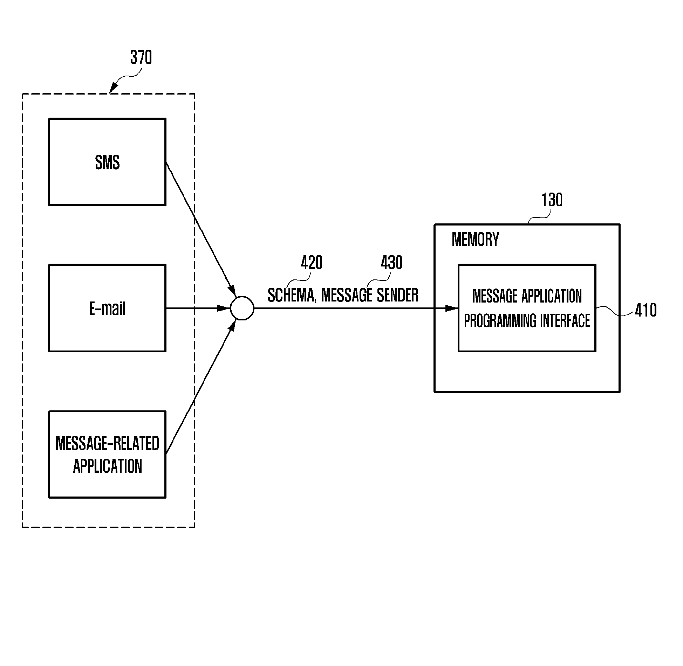

FIG. 4 illustrates a registration process of a message application programming interface according to various embodiments of the present invention.

Referring to FIG. 4, the memory 130 includes a message application programming interface 410. The message application programming interface 410 controls or manages each message-related application 370. Before implementing the present invention, the processor 210 (see FIG. 2) may register in advance, in the message application programming interface 410, a schema 420 of each of the message-related applications 370, such as, a Short Message Service (SMS), an e-mail, and the like. The processor 210 may also register a message sender 430 that transmits a message of an application 370 related to each schema 420.

The scheme 420 refers to a structure of data, and may be used for readily recognizing information that data bears so as to acquire required data from among a huge amount of data.

When the processor 210 recognizes completion of writing a message, the processor 210 may transmit a message transmission signal to an application transmission module 650. The application transmission module 650 may transmit the message transmission signal to the message sender 430.

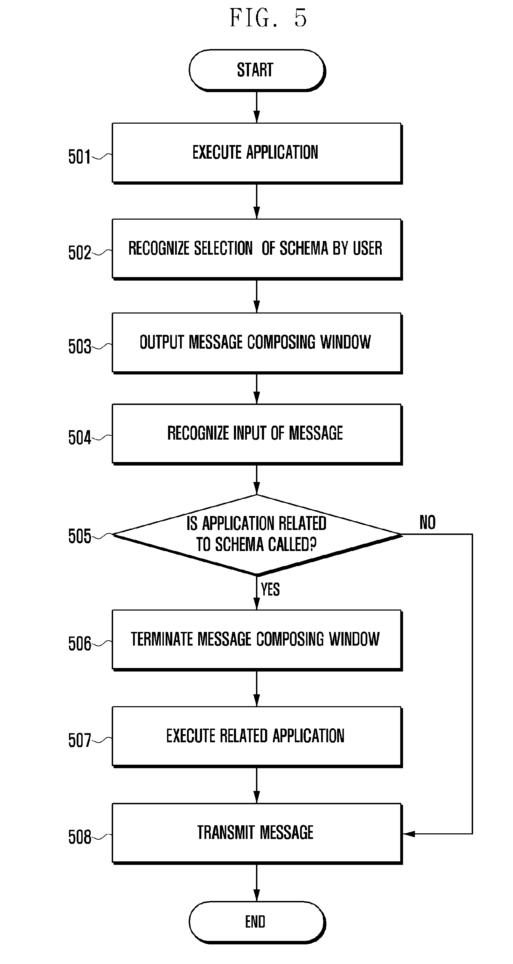

FIG. 5 is a flowchart illustrating a message transmission process of an electronic device that implements a message application operating method according to an embodiment of the present invention.

Referring to FIG. 5, in step 501, the processor 210 (see FIG. 2) executes the application 370 in response to a request of a user. The application 370 (see FIG. 3) may be an e-mail, a web-browser, and the like. The message-related application 370 includes the schema 420 (see FIG. 4) that includes information associated with a receptor or a received page. In step 502, the processor 210 recognizes selection of the schema 420 by the user. In step 503, the processor 210 outputs a message composing window on a screen. In step 504, the processor 210 recognizes the input of a message by the user. In step 505, based on an input message of the user, whether the application 370 related to the schema 420 is called is determined. When the processor 210 recognizes the selection of a transmission button by the user, that is, it is determined that the application 370 is not called, the processor 210 may proceed to step 508. In step 508, the processor 210 controls the communication module 160 so as to transmit the message. When the processor 210 recognizes the selection of an application call button by the user, that is, it is determined that the application 370 is called, the processor 210 terminates the display of the message composing window in step 506. In step 507, the processor 210 executes the application 370 corresponding to the schema 420. The processor 210 may control the display module 260 so as to display, on the screen, a message composing window related to the application 370. The processor 210 may control the display module 260 so as to display the input message, in an application window. The processor 210 may proceed to step 508 after executing step 507.

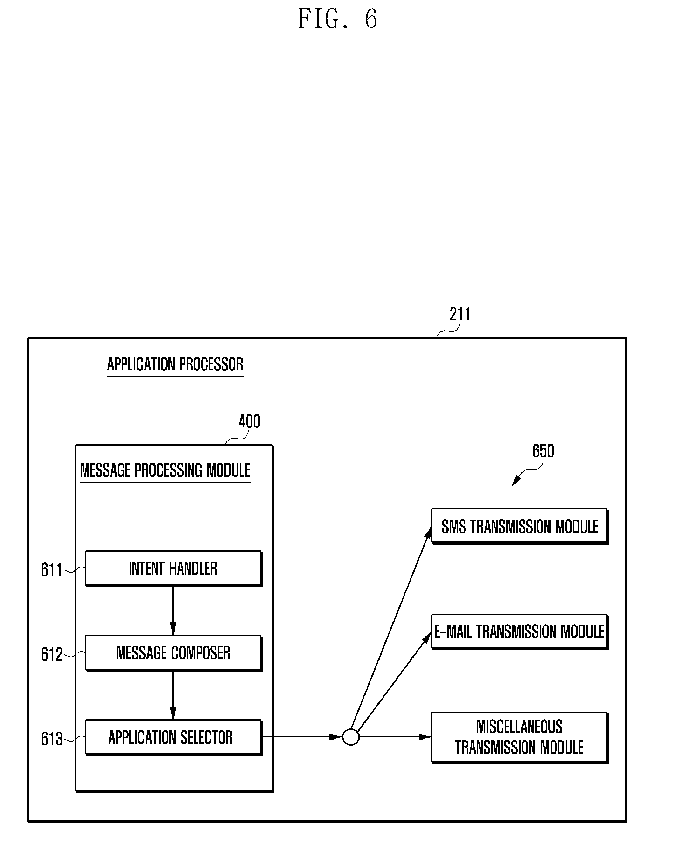

FIG. 6 is a block diagram of a message processing module 400 according to various embodiments of the present invention.

Referring to FIG. 6, the message processing module 400 controls an SMS application transmission module, an e-mail transmission module, and the miscellaneous message transmission module 650. The message processing module 400 includes an intent handler 611, a message composer 612, and an application selector 613.

The processor 210 (see FIG. 2) may recognize that a user selects a Uniform Resource Locator (URL), a phone number, an e-mail, and the like, through the display module 260. Each of the URL, the phone number, the e-mail, and the like may have a related schema 420 (see FIG. 4).

The intent handler 611 of the message processing module 400 receives related schemas 420 through the input of the user. The intent handler 611 recognizes the selected schemas 420, and filters schemas 420 that are not related to message transmission. The message composer 612 outputs a message composing window on the display module 260 (see FIG. 2) through the window manager 342 (see FIG. 3).

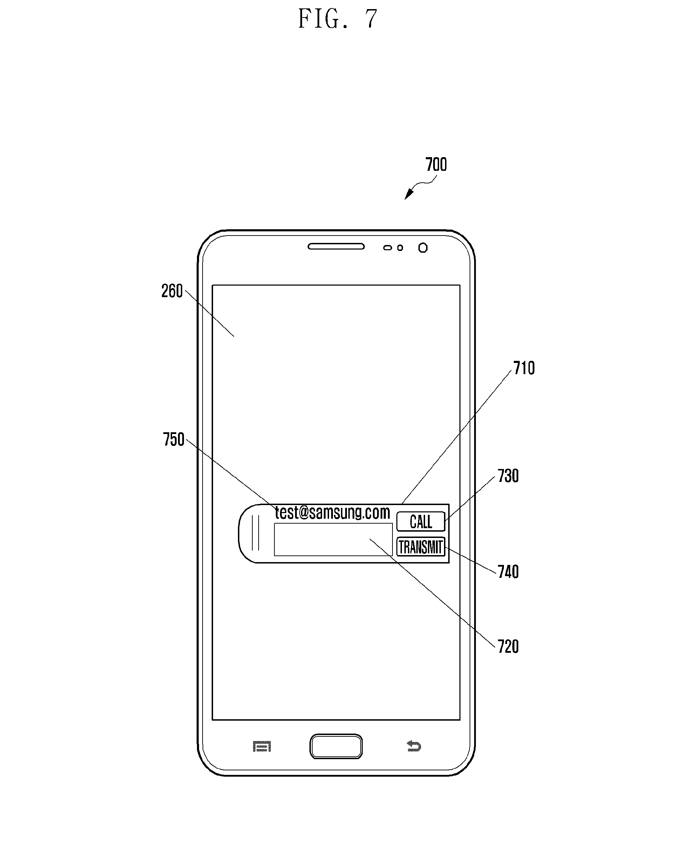

The message composer 612 outputs, to a message composing window 710 (see FIG. 7), a message written by the input of the user. When the selection of a transmission button by the user is recognized, a related application selector 613 determines the registered schema 420, and transfers a message transmission request signal to the related transmission module 650 (for example, an SMS transmission module).

The transmission module 650 that receives the message transmission signal controls the communication module 160 to transmit the message. Here, the message may be transmitted without execution of the application related to the schema 420. That is, the transmission module 650 may transmit the message by executing the message sender 430 (see FIG. 4) of the message application programming interface 410 (see FIG. 4).

FIG. 7 illustrates a screen on which a message composing window is output according to an embodiment of the present invention.

Referring to FIG. 7, the processor 210 (see FIG. 2) displays the message composing window 710 on a portion of the display module 260. When a user selects a character string including a schema such as an e-mail address, a phone number, and the like, the processor 210 displays the message composing window 710 on the display module 260. The message composing window 710 may be moveable in the display module 260.

The message composing window 710 includes a composing window 720, a call button 730, a transmission button 740, and a unique identifier 750.

The composing window 720 is a window in which the user writes a message to be transmitted. The call button 730 is a button that calls a related application 370 when the user additionally desires a service different from the transmission service.

The transmission button 740 transmits a message to a receiver when the transmission button 740 is selected after the user writes a message in the composing window 720. The unique identifier 750 shows information included in the schema 420 (see FIG. 4). For example, when an e-mail including the schema 420 is selected from a web page, information associated with an e-mail, that is, a mail address, may be output to the unique identifier 750 of the message composing window 710.

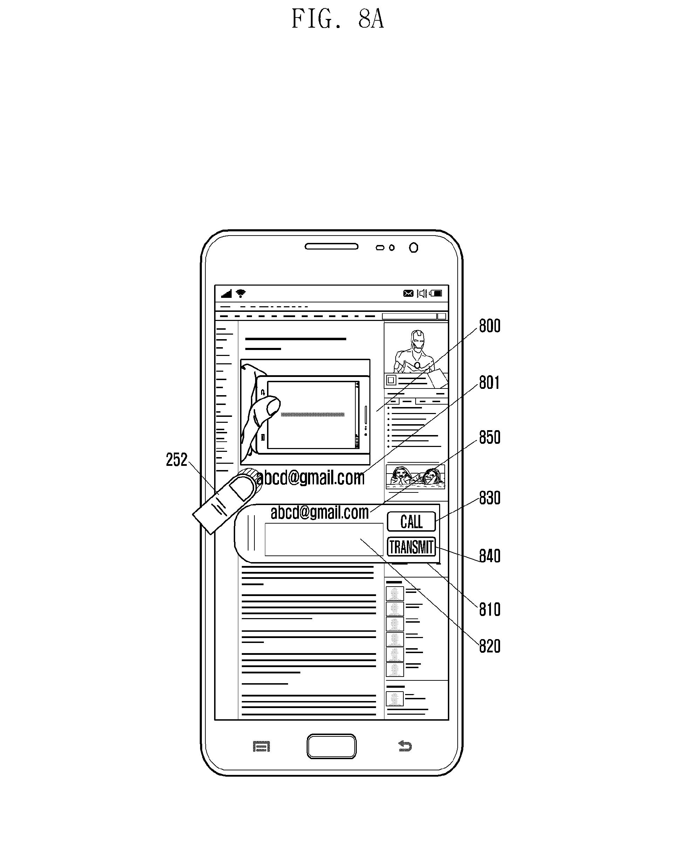

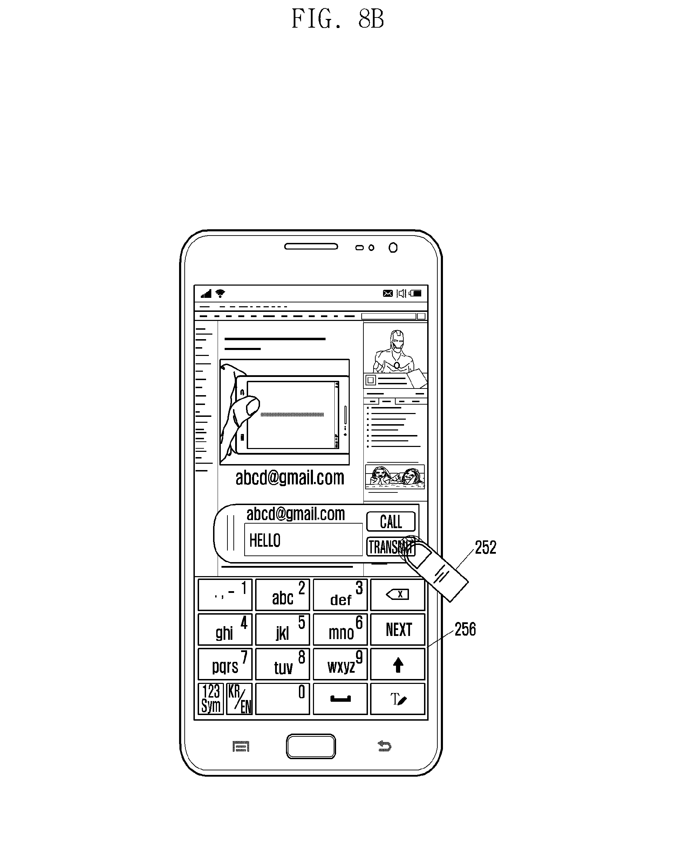

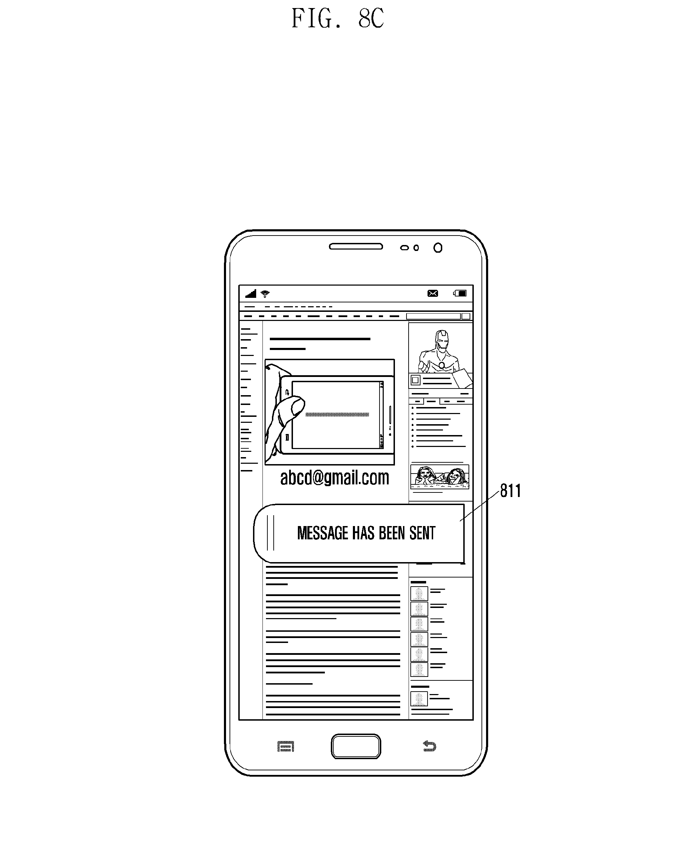

FIG. 8A illustrates a screen displaying a web browser and a message composing window displayed on a portion of the web browser, FIG. 8B illustrates an example of using a message composing window, and FIG. 8C illustrates completion of message transmission of the message composing window.

Referring to FIG. 8A, the processor 210 (see FIG. 2) outputs a web browser 800 to the display module 260 (see FIG. 2). The web browser 800 includes an e-mail 801 including the schema 420 (see FIG. 4). The processor 210 selects the e-mail of the web browser 800 through the selection of the user. In response to this, the intent handler 611 recognizes the schema 420 related to the e-mail 801, and filters other schemas 420. The intent handler 611 (see FIG. 6) then transfers the recognized schemas 420 to the message composer 612 (see FIG. 6). In response to this, the message composer 612 controls the display module 260 to display a message composing window 810. The message composing window 810 includes an input window 820, a call button 830, a transmission button 840, and a unique identifier 850. Here, the unique identifier 850 may be information corresponding to the recognized schema 420.

Referring to FIG. 8B, the message composer 612 (see FIG. 6) outputs, to the message composing window 810 (see FIG. 8A), a message written by the input of the user. When the selection of the transmission button 840 (see FIG. 8A) by the user is recognized, the related application selector 613 (see FIG. 6) determines the registered schema 420 (see FIG. 4), and transfers a message transmission request signal to the related transmission module 650 (see FIG. 6) (for example, an SMS transmission module). The e-mail application transmission module 650 controls the communication module 160 (see FIG. 1) to transmit the message. Here, the message may be transmitted without execution of the application related to the schema 420. That is, the transmission module 650 may transmit the message by executing the message sender 430 (see FIG. 4) of the message application programming interface 410 (see FIG. 4).

Referring to FIG. 8C, after the message is transmitted, the message composer 612 (see FIG. 6) controls the display module 260 (see FIG. 2) to display a message-complete-state message 811.

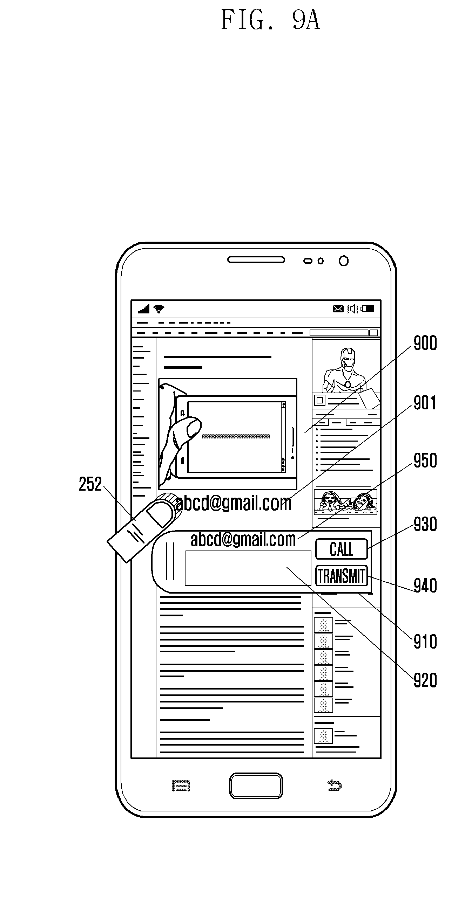

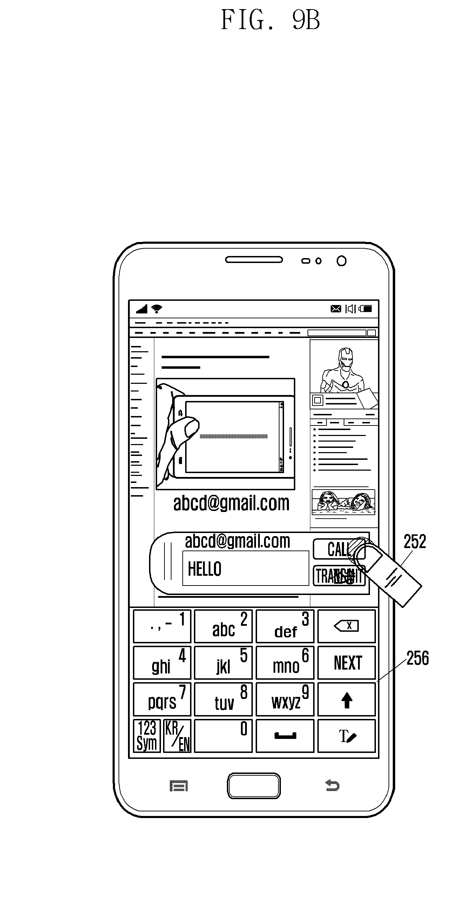

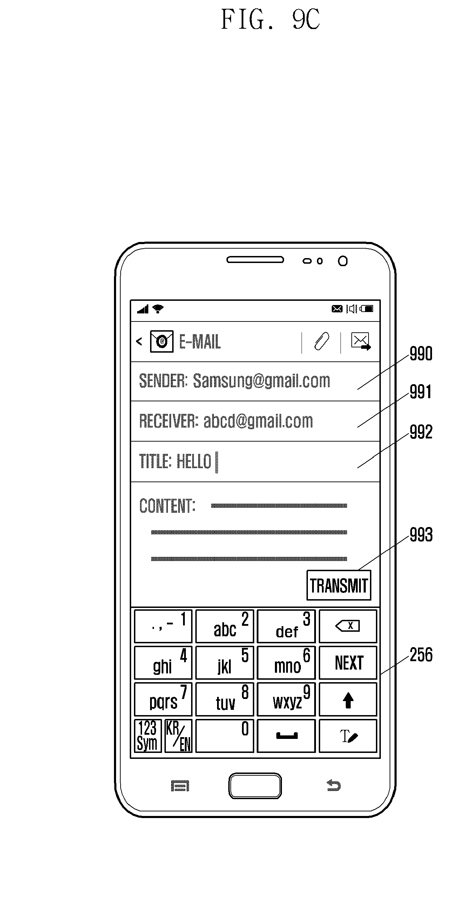

FIG. 9A illustrates a screen displaying a web browser and a message composing window displayed on a portion of the web browser, FIG. 9B illustrates an example of using a message composing window, and FIG. 9C illustrates a called application that is executed.

Referring to FIG. 9A, the processor 210 (see FIG. 2) outputs a web browser 900 to the display module 260 (see FIG. 2). The web browser 900 includes an e-mail 901 including the schema 420 (see FIG. 4). The processor 210 selects the e-mail of the web browser 900 by recognizing the selection of the user. In response to this, the intent handler 611 recognizes the schema 420 related to the e-mail 901, and filters other schemas 420. The intent handler 611 (see FIG. 6) then transfers the recognized schemas 420 to the message composer 612 (see FIG. 6). In response to this, the message composer 612 controls the display module 260 to display the message composing window 910. The message composing window 910 includes a composing window 920, a call button 930, a transmission button 940, and a unique identifier 950. Here, the unique identifier 950 may be information corresponding to the recognized schema 420.

Referring to FIG. 9B, the message composer 612 (see FIG. 6) outputs, to the message composing window 910 (see FIG. 9A), a message written by the input of the user. When the selection of the call button 930 (see FIG. 9A) by the user is recognized, the message composer 612 terminates the message composing window 910.

The processor 210 (see FIG. 2) executes the application 370 (see FIG. 3) (for example, an e-mail application) corresponding to the schema 420 (see FIG. 4), and controls the display module to display a corresponding window.

Referring to FIG. 9C, the e-mail application 370 (see FIG. 3) includes a sender 990, a receiver 991, a title 992, a content, and the like. The sender 990 may be designated by the user. The receiver 991 may be set based on the information included in the schema 420 (see FIG. 4). When the selection of the transmission button 993 by the user is recognized, the processor 210 (see FIG. 2) transmits an execution request to the application transmission module 650 (see FIG. 6) (for example, an e-mail application transmission module). The e-mail application transmission module 650 controls the communication module 160 to transmit the message.

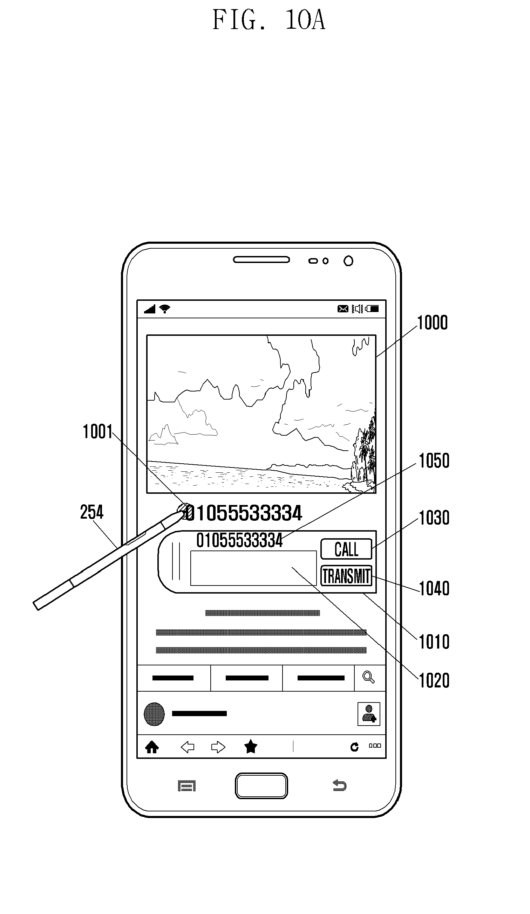

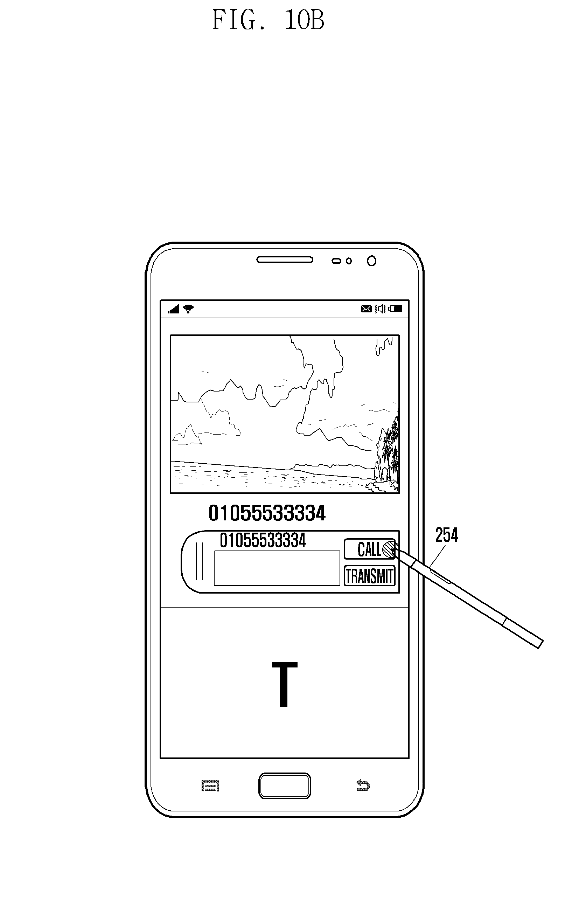

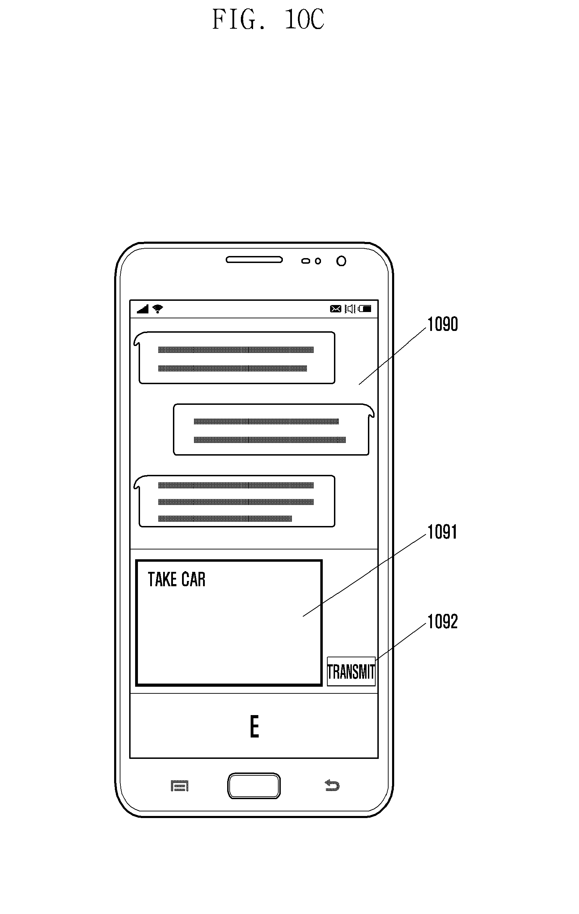

FIG. 10A illustrates a screen displaying a web browser and a message composing window displayed on a portion of the web browser, FIG. 10B illustrates an example of using a message composing window, and FIG. 10C illustrates a called application that is executed.

Referring to FIG. 10A, the processor 210 (see FIG. 2) controls the display module 260 (see FIG. 2) to display a web browser 1000 on a screen. The web browser 1000 includes a serial number 1001 (for example, a contact number) including the schema 420 (see FIG. 4). The user selects the serial number 1001 of the web browser 1000 with the pen sensor 254. In response to this, the intent handler 611 recognizes the schema 420 (see FIG. 4) related to the serial number 1001, and filters other schemas 420. The intent handler 611 (see FIG. 6) then transfers the recognized schemas 420 to the message composer 612 (see FIG. 6). In response to this, the message composer 612 controls the display module 260 to display a message composing window 1010. The message composing window 1010 includes an input window 1020, a call button 1030, a transmission button 1040, and a unique identifier 1050. Here, the unique identifier 1050 may be information corresponding to the recognized schema 420.

Referring to FIG. 10B, the message composer 612 (see FIG. 6) outputs, to the message composing window 1010 (see FIG. 10A), a message written by the input of the user. When the selection of the call button 1030 by the user is recognized, the message composer 612 terminates the message composing window 1010, and executes the SMS application 370 (see FIG. 3). Referring to FIG. 10C, the SMS application 370 (see FIG. 3) includes an SMS chatting window 1090, a text message window 1091, and a transmission button 1092. The SMS chatting window 1090 may include an existing chat history associated with the serial number 1001 (see FIG. 10A) that has the schema 420 or may output an empty screen when a chat history does not exist. When the selection of the transmission button 1192 by the user is recognized, the processor 210 transmits an execution request to the application transmission module 650 (see FIG. 6) (for example, an SMS application transmission module). The SMS application transmission module 650 controls the communication module 160 (see FIG. 1) to transmit the message.

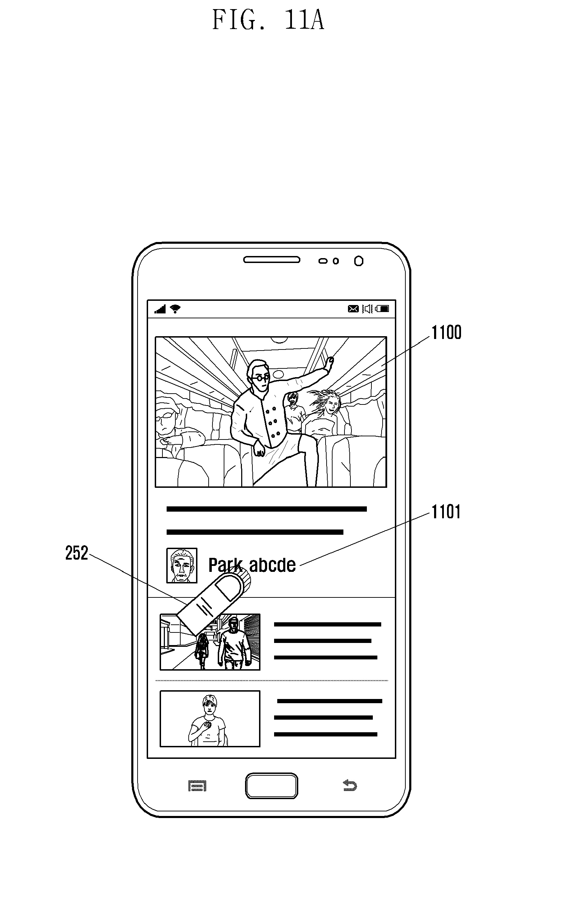

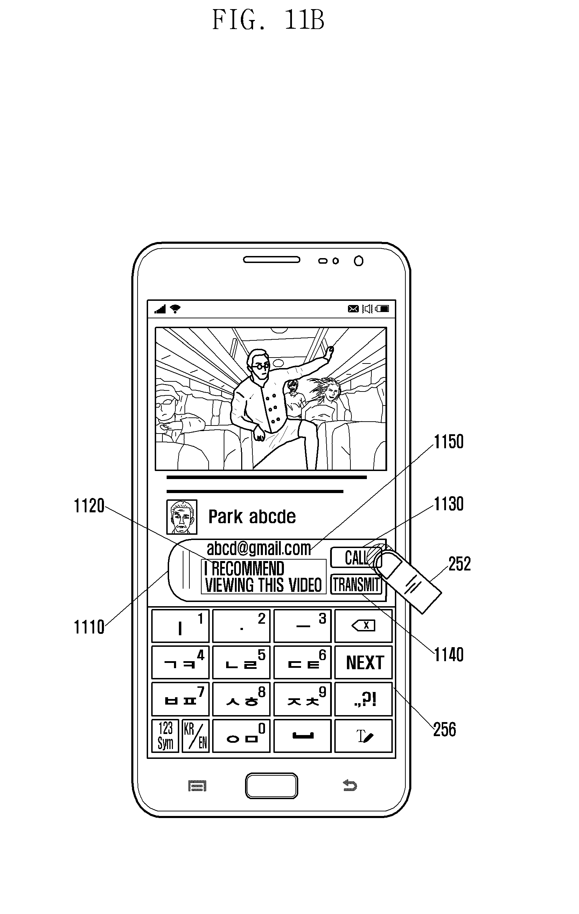

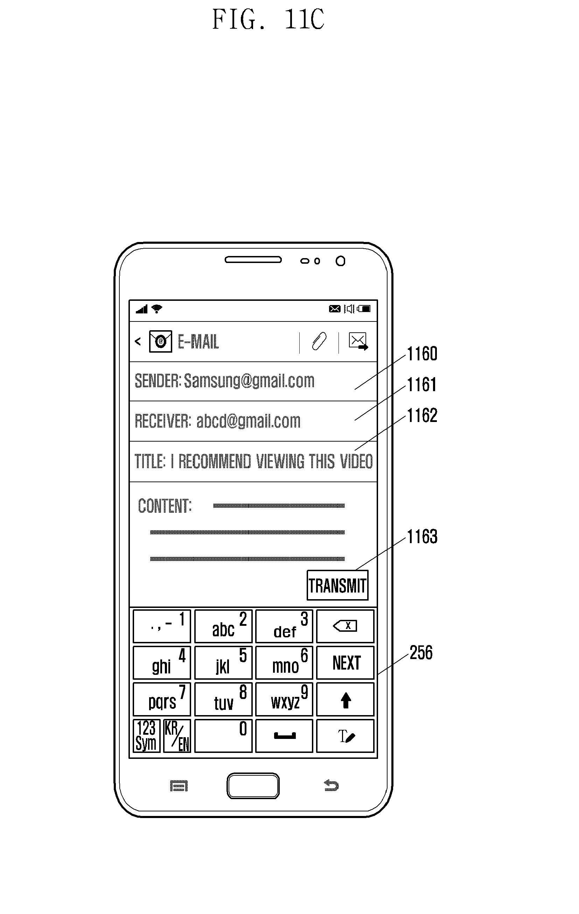

FIG. 11A illustrates a screen displaying a video browser, FIG. 11B illustrates a screen in which a message composing window is used, and FIG. 11C illustrates a called application that is executed.

Referring to FIG. 11A, a video browser 1100 includes a video screen that is being played back, a writer's name 1101, and a video list. The writer's name 1101 includes the schema 420 (see FIG. 4). The user selects the writer's name 1101 while viewing the video. In response to this, the intent handler 611 (see FIG. 6) recognizes the schema 420 related to the writer's name 1101, and filters other schemas 420. The intent handler 611 then transfers the recognized schemas 420 to the message composer 612 (see FIG. 6). In response to this, the message composer 612 controls the display module 260 to display the message composing window 1110 (see FIG. 11B). The message composing window 1110 (see FIG. 11B) includes an input window 1120, a call button 1130, a transmission button 1140, and an unique identifier 1150. Here, the unique identifier 1150 may be information corresponding to the recognized schema 420.

Referring to FIG. 11B, the message composer 612 (see FIG. 6) outputs, to the message composing window 1110, a message written by input of the user. When the selection of the call button 1130 by the user is recognized, the message composer 612 terminates the message composing window 1110.

The processor 210 (see FIG. 2) executes the application 370 (see FIG. 3) (for example, an e-mail application) corresponding to the schema 420, and controls the display module 260 (see FIG. 2) to display a corresponding window.

Referring to FIG. 11C, the e-mail application 370 (see FIG. 3) includes a sender 1160, a receiver 1161, a title 1162, a content, and the like. The sender 1160 may be designated by the user. The receiver 1161 may be set based on the information included in the schema 420 (see FIG. 4). When the selection of a transmission button 1163 by the user is recognized, an execution request is transmitted to the application transmission module 650 (see FIG. 6) (for example, an e-mail application transmission module). The e-mail application transmission module 650 controls the communication module 160 to transmit the message.

The processor 210 (see FIG. 2) may maintain playback of the video when the video is being played back. That is, the processor 210 may enable the user to simultaneously view a video and use a message transmission environment.

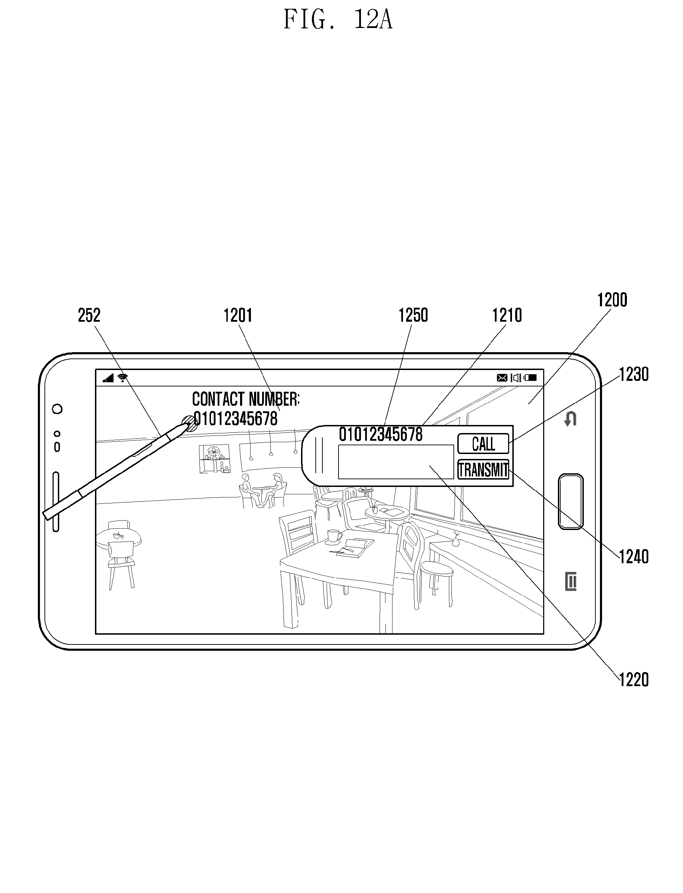

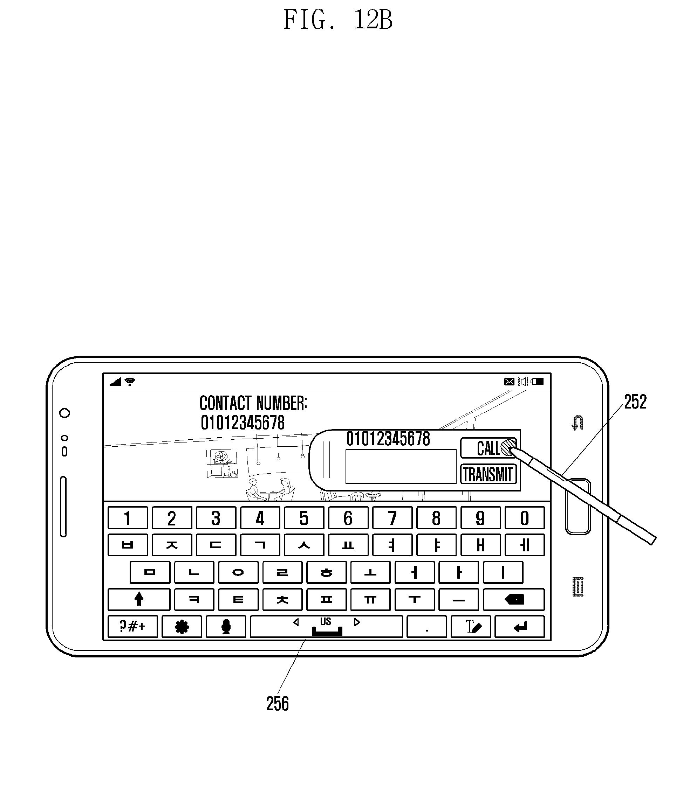

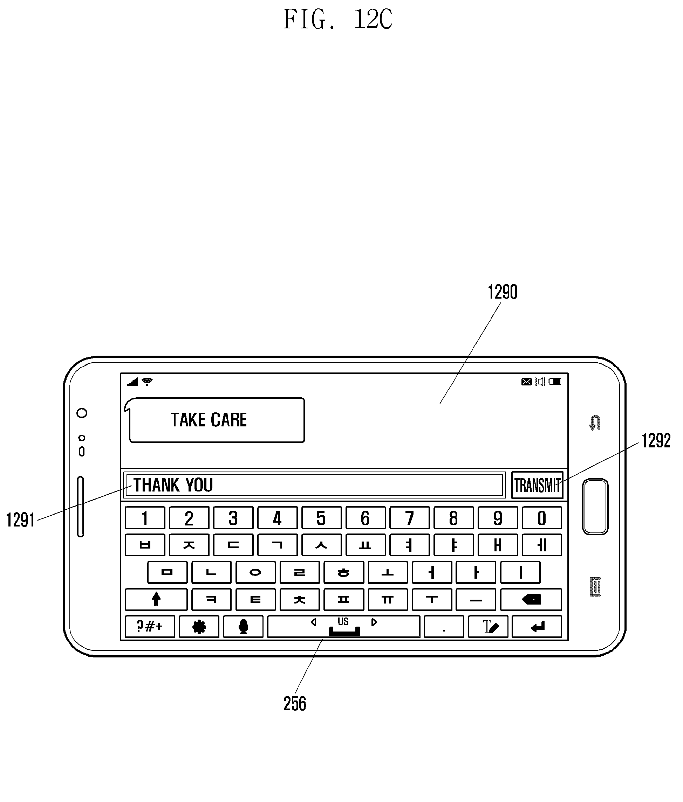

FIG. 12 illustrates a screen displaying a web browser in a landscape mode and a message composing window displayed on a portion of the web browser, FIG. 12B illustrates a screen in which a window is used, and FIG. 12C illustrates a called application that is executed.

Referring to FIG. 12A, the processor 210 (see FIG. 2) controls the display module 260 (see FIG. 2) to display a web browser 1200 on a screen. The web browser 1200 includes a serial number 1201 (for example, a contact number) having the schema 420 (see FIG. 4).The user selects the serial number 1201 of the web browser 1200 with the pen sensor 254. In response to this, the intent handler 611 (see FIG. 6) recognizes the schema 420 related to the serial number 1201, and filters other schemas 420. The intent handler 611 then transfers the recognized schemas 420 to the message composer 612 (see FIG. 6). In response to this, the message composer 612 controls the display module 260 to display a message composing window 1210. The message composing window 1210 includes an input window 1220, a call button 1230, a transmission button 1240, and a unique identifier 1250. Here, the unique identifier 1250 may be information corresponding to the recognized schema 420.

Referring to FIG. 12B, the message composer 612 (see FIG. 6) outputs, to the message composing window 1210 (see FIG. 12A), a message written by the input of the user. When the selection of the call button 1230 by the user is recognized, the message composer 612 terminates the message composing window 1210 and executes a SMS application 370 (see FIG. 3).

Referring to FIG. 12C, the SMS application 370 (see FIG. 3) includes an SMS chatting window 1290, a text message window 1291, and a transmission button 1292. The SMS chatting window 1290 may include an existing chat history associated with the serial number 1201 (see FIG. 12A) including the schema 420 (see FIG. 4), or may output an empty screen when chat history does not exist. When the selection of the transmission button 1292 by the user is recognized, the processor 210 (see FIG. 2) transmits an execution request to the application transmission module 650 (see FIG. 6) (for example, an SMS application transmission module). The SMS application transmission module 650 controls the communication module 160 (see FIG. 1) to transmit the message.

The method according to the invention as described above may be implemented as a program command which can be executed through various computers and recorded in a computer-readable recording medium. Further, the program instructions may be specially designed and constructed, but may be well known and used by those skilled in the art of computer software. Further, the storage medium may include a hardware device such as a hard disk, a floppy disk, a magnetic media such as a magnetic tape, an optical media such as a Compact Disc ROM (CD-ROM) and DVD, a magneto-optical media such as a floptical disk, a ROM, a RAM, and a flash memory. In addition, the program instructions may include high class language codes, which are executed in a computer by using an interpreter, as well as machine codes which are made by a compiler.

The embodiments disclosed in the present specification and drawings are provided merely to readily describe and to help in a thorough understanding of the present invention, but are not intended to limit the scope of the present invention. Therefore, it should be understood that all modifications or modified forms drawn by the technical idea of the present invention in addition to the embodiments disclosed herein are included in the scope of the present invention as defined by the appended claims and their equivalents.

## Claims

1. A method for an electronic device to manage a message application, the method comprising:
executing an application including a schema;
recognizing an execution request for a message composing window while the application is executed;
displaying the message composing window in response to the request;
recognizing a completion of inputting a message in the message composing window; and
requesting a transmission of the message to a related application that processes the schema.

2. The method of claim 1, wherein the message composing window has the schema as a unique identifier, and includes a composing window, a transmission button, and a call button.

3. The method of claim 1, wherein displaying the message composing window is executed when the related application to process the schema exists.

4. The method of claim 1, wherein displaying the message composing window further comprises:
displaying the message composing window in an entirety, a portion, or on the outside of a screen of the application; and
moving the message composing window.

5. The method of claim 1, wherein recognizing the completion of inputting the message further comprises recognizing a selection of a transmission button or a call button of the message composing window.

6. The method of claim 5, wherein recognizing the selction of the transmission button or the call button further comprises terminating the message composing window.

7. The method of claim 6, further comprising executing the related application after terminating the message composing window.

8. The method of claim 1, wherein requesting the transmission of the message further comprises requesting a transmission of the message through a message sender of the related application.

9. An electronic device, comprising:
a display module including a touch panel installed in a screen;
a memory configured to store a schema and a message sender of a related application; and
a processor configured to execute an application including a schema, to recognize an execution request for a message composing window while the application is executed, to display the message composing window in response to the request, to recognize a completion of inputting a message in the message composing window, and to request a transmission of the message to a related application that processes the schema.

10. The electronic device of claim 9, wherein the processor is configured to display the message composing window when the related application to process the schema exists.

11. The electronic device of claim 9, wherein the processor is configured to display the message composing window in an entirety, a portion, or on the outside of a screen of the application, and to move the message composing window.

12. The electronic device of claim 9, wherein the processor is configured to recognize a selection of a transmission button or a call button of the message composing window.

13. The electronic device of claim 12, wherein the processor is configured to terminate the message composing window.

14. The electronic device of claim 13, wherein the processor is configured to execute the related application after terminating the message composing window.

15. The electronic device of claim 9, wherein the processor is configured to request a transmission of the message through a message sender of the related application.
